# EUROPEAN PATENT SPECIFICATION

(11) **EP 2 188 807 B1**
(45) Date of publication and mention of the grant of the patent: **05.09.2012**
(21) Application number: 08780183.3
(22) Date of filing: 15.07.2008
(51) Int. Cl.: G11B 5/55, G11B 19/04

(54) **IMPROVED LUBRICANT DISTRIBUTION IN HARD DISK DRIVES USED FOR DIGITAL VIDEO RECORDERS**
VERBESSERTE SCHMIERMITTELVERTEILUNG IN FESTPLATTENLAUFWERKEN FÜR DIGITALVIDEOREKORDER
DISTRIBUTION DE LUBRIFIANT AMÉLIORÉE DANS DES LECTEURS DE DISQUE DUR UTILISÉS POUR DES MAGNÉTOSCOPES NUMÉRIQUES

(30) Priority: 22.08.2007 US 965709 P
(43) Date of publication of application: 26.05.2010
(73) Proprietor: Thomson Licensing, 92130 Issy-les-Moulineaux (FR)
(72) Inventor: KOESTER, William, Charles, Grosse Ile, Michigan 48138 (US)
(74) Representative: Thies, Stephan
(86) International application number: PCT/US2008/008605
(87) International publication number: WO 2009/025702

(56) References cited:
- US-A1- 2003 086 200
- US-A1- 2006 092 549
- US-B1- 6 356 405

## Description

### TECHNICAL FIELD

The invention relates generally to video recorders and, in particular to digital video recorders (DVRs).

### BACKGROUND OF THE INVENTION

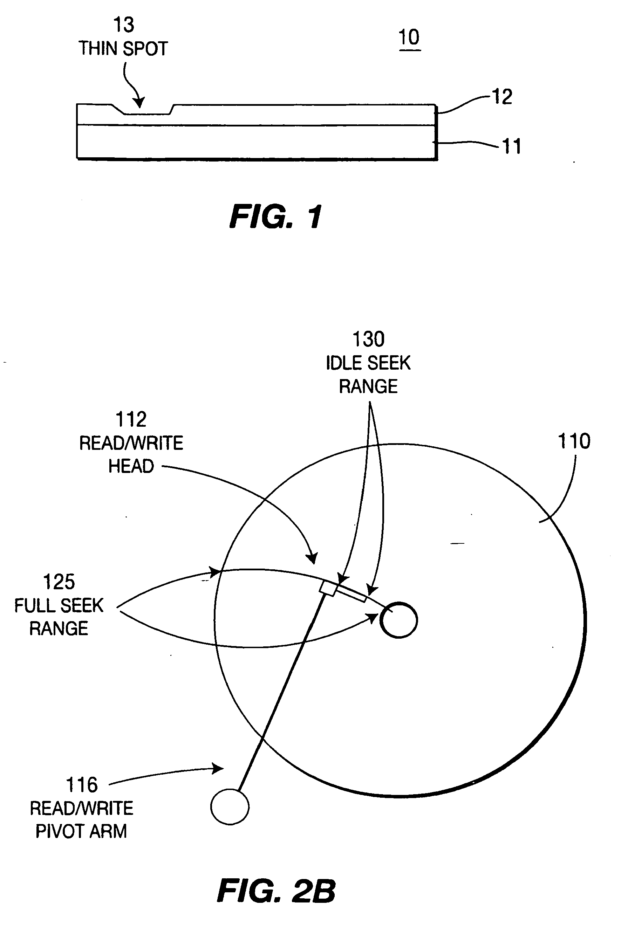

The hard disk of a digital video recorder (DVR) typically includes a lubricant on the platter to prevent direct head contact and wear. In particular, if the read/write head remains in one position too long it can burrow down through the lubricant to make direct contact with the platter or create ruts and thin spots in the lubricant causing damage and premature failure. Referring to FIG. 1, for example, there is shown a side view of a hard disk drive 10 used in a digital video recorder. The hard disk drive 10 includes a platter 11 on which a layer of lubricant 12 is disposed. One or more thin spot 13 (rut) may form in the layer of lubricant when the read/write head remains in one position too long.

Most DVRs include firmware routines designed to prevent such damage. However, current disk firmware typically relies on large periods of idle time in order to perform such housekeeping operations. The idle times are times when no reads or writes to the disk are performed. The housekeeping operations generally include seeking the heads across the platter to redistribute the lubricant. Current firmware routines require seconds or minutes of idle time to execute such housekeeping routines. The disadvantage to this approach for DVR applications is that there will never be large periods of idle time so the housekeeping routines never run resulting in early wear and failure.

Patent Application Publication US 2003/0086200 A1 by Tokizono et al. purports to disclose a disk drive unit and a method for controlling a disk drive unit, where data is read from and written to a magnetic disk by a magnetic head. A moving distance of the magnetic head in a radial direction is detected within a predetermined period of time, and the magnetic head is moved for seeking by a predetermined distance when the moving distance detected is small.

### BRIEF SUMMARY OF THE INVENTION

The present invention is directed to a method for utilizing idle times during read/write operations for a personal video recorder (PVR). Idle times during read/write operations are predicted and then such Idle times are used to perform hard disk maintenance functions.

### BRIEF SUMMARY OF THE DRAWINGS

FIG. 1 is a side view of a hard disk drive used in a digital video recorder including a thin spot in the lubricant layer;
FIGS. 2A-2B are a side and top view of a platter of the hard disk drive;
FIG. 3 is a steady state read/write/idle timing operation of a digital video recorder;
FIG. 4 is a flow diagram of the read/write/idle timing operation of a digital video recorder.

### DETAILED DESCRIPTION

The present invention is directed to utilizing the limited idle times that are available during DVR operation. While the idle times may be on the order of tens to hundreds of milliseconds, they will also be fairly predictable in their timing as a personal video recorder (PVR) product will reach a steady state of operation at approximately 50 % duty cycle. An algorithm may be used to track current operations in order to predict when a next idle period will occur and how long it will last. This information will then be used to trigger a head seek given the constraints of the duration of the expected idle period. The head will be moved as far as possible such that it can move out and be back in its previous position before the predicted end of the idle time period. Since there may not be time for seeks across the full platter, shorter seeks alternating on each side of the current location may be used.

The advantage of this approach is that some lubricant distribution will take place during idle periods that would otherwise go unused. The algorithm sacrifices the ideal full surface-seek for shorter seeks that improve lubricant distribution significantly as compared to when no housekeeping is performed at all.

All modern hard disk drives (HDDs) use a lubricant between the media and the heads. This layer may be microscopically thin. If an HDD is forced to keep the heads located over a single cylinder, the lubricant will begin to accumulate on the heads and will develop ridge walls relative to the sides of the heads. This can eventually lead to failure of the drive.

Most HDDs include firmware which will randomly reposition the heads during idle periods. However, poorly designed middleware can force the heads to park over a given cylinder and defeat the automatic wear-leveling functions. It is difficult to overcome this issue in the driver code without an impact on overall performance. Each drive manufacturer will have a potentially different formula and/or requirement for implementing disk wear leveling.

Small computer disk drives usually require that the dwell time for the disk head be spread widely across the disk surface. This movement supports more even spreading of the disk surface lubricant. Usually, disk wear leveling is implemented through multiple cylinder seeks away from the current head location.

One challenge for the STB market is that some STB implementations are always recording onto the single disk for implementing trick mode type functions. Without hints from the STB software, there is little or no opportunity for the disk drive to automatically seek elsewhere so as to implement internal leveling algorithms. Specifically, so far, the typical STB is not stretching the disk drive seek time or transfer rate capabilities, so it might be desirable that the STB software provide hints or specific seek commands that would implement or hint towards wear leveling opportunities. There might be enough time left over - given the fact that the disk drive capabilities are not being stressed, for the drive to seek elsewhere, thereby assisting wear leveling. Wear leveling consists of two main issues. Lubricant distribution and sector write cycle distribution.

Current hard disks operate with close head to platter tolerances. The platters contain a thin layer of lubricant which normally stays evenly distributed on the platter due to the head seeking across the surface of the platter during normal operation. If the head remains in one area too long this thin layer of lubricant can be worn away allowing the head to physically contact the platter causing damage.

Current drives have built in algorithms that cycle the heads across the platter to redistribute the lubricant if the drive remains idle for a period of time usually measured in minutes and sometimes as long as 5 minutes. Most current algorithms rely on the fact that the HD will have idle periods with no activity, which the drive can then take advantage of to perform this housekeeping chore.

DVR products will never have idle periods due to the constant reading and writing from the pause buffer. In these cases the housekeeping algorithms to spread the lubricant are short circuited and will never have an opportunity to execute.

The DVR application is always reading and writing at ∼50% duty cycle. There are idle periods but they are too short for the current housekeeping algorithms to detect and use. It may be possible to develop new algorithms that sense the timing of these short idle periods and use this time to seek the heads and distribute the lubricant without disrupting operation.

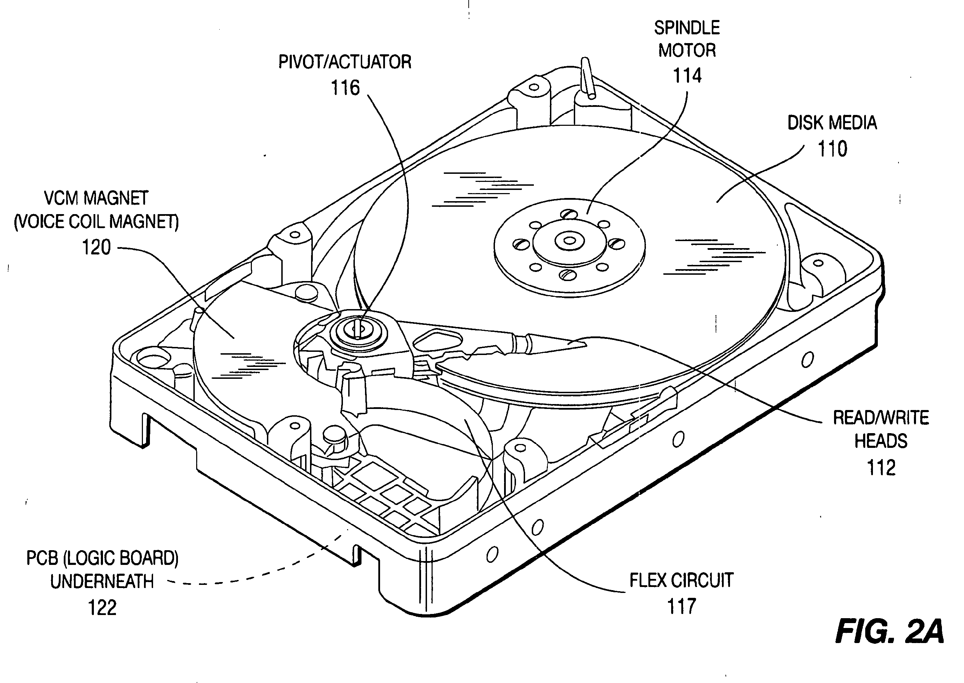

Referring to FIGS. 2A-2B there is shown a side and top view of a hard disk drive 100. The hard disk drive 100 includes a platter (not shown), a disk media 110, read/write heads 112, a spindle motor 114, a read/write pivot arm 116, a flexible circuit 117, a voice coil magnet 120 and a logic board 122.

The read/write heads 112 are attached to the read/write pivot arm 116. During the read/write operation of the disk drive, the arm 116 moves the heads 112 over the surface of the disk media 110.

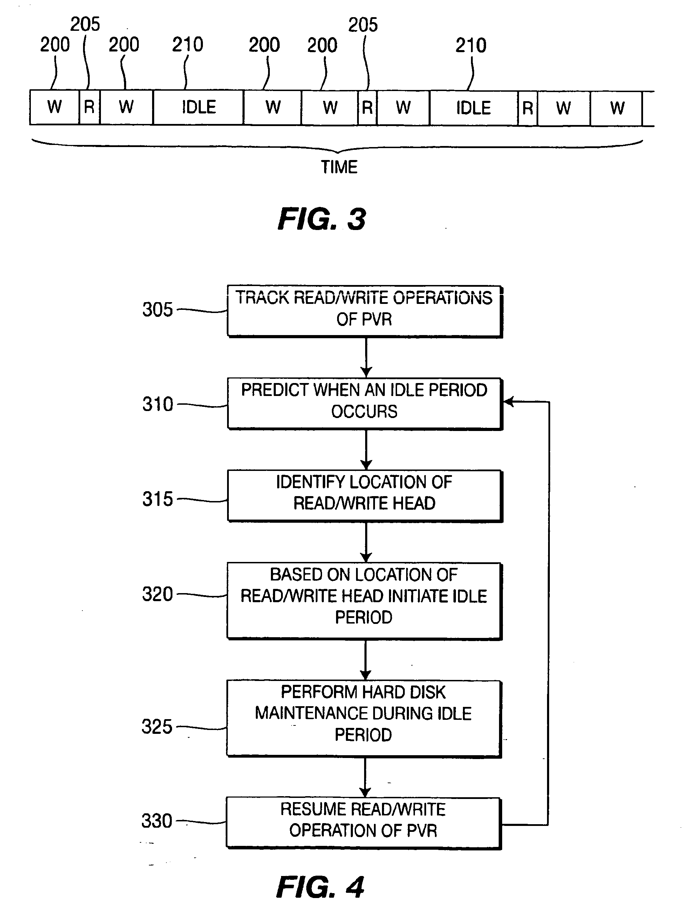

The present invention is directed to utilizing the limited idle times that are available during read/write operations. During read/write operations the idle times for the read/write heads 112 may be on the order of tens to hundreds of milliseconds. Referring to FIG. 3 is an example of a steady state read/write/idle timing operation of a digital video recorder. Read times 205 are interspersed between write times 200 and idle times 210.

The idle times 200 will also be fairly predictable as a personal video recorder (PVR) product will reach a steady state of operation at approximately 50 % duty cycle. An algorithm may be used to track a full range of read/write operations 125 in order to predict when an idle period will occur and how long it will last. This information will then be used to trigger an idle seek range 130 given the constraints of the duration of the expected idle period. The head will be moved as far as possible such that it can move out and be back in its previous position before the predicted end of the idle time period. Since there may not be time for seeks across the full platter, shorter seeks alternating on each side of the current head location may be used.

FIG. 4 illustrates the inventive method in a step-wise manner. Initially, the read/write operations 305 of the PVR are tracked. Based on this tracking an algorithm is used to predict the occurance of read/write idle times 310. The position of the read/write head is identified in relation to the idle time as well as the location on the disk where mantainence should be performed 315. Based on the location of the read/write head, the duration of the idle period and the location on the disk where maintenance is needed a maintanence idle period is initiated 320. Hard disk maintenance is performed 325. Thereafter, the read/write operation of the PVR is resumed 330. Steps 310-330 may be repeated.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are within the scope of the following claims.

## Claims

1. A method of operating a read/write apparatus, comprising the steps of:
- predicting (310) idle times for a read/write head based on read/write operation;
- identifying a location on a hard disk where lubricant layer maintenance is needed; and
- performing (325) lubricant layer maintenance on the hard disk based on the duration of the idle time and a location on the hard disk for the read/write head.

2. The method of claim 1 wherein the read/write operations are resumed (330) after performing disk maintenance.

3. The method of claim 1 where the performing step is repeated.

4. The method of claim 1 wherein the read/write operation is tracked (305) prior to predicting (310) idle times.

## Patentansprüche

1. Verfahren zum Betreiben einer Lese-/Schreibvorrichtung, das die folgenden Schritte umfasst:
- Vorhersagen (310) von unproduktiven Zeiten eines Schreib-/Lesekopfes basierend auf Lese-/Schreibbetrieb;
- Identifizieren einer Stelle auf einer Festplatte, wo Wartung der Gleitmittelschicht benötigt wird, und
- Durchführen (325) der Wartung der Gleitmittelschicht auf der Festplatte auf der Grundlage der Dauer der unproduktiven Zeit und einem Ort auf der Festplatte für den Schreib-/Lesekopf.

2. Verfahren nach Anspruch 1, bei dem die Lese-/Schreibvorgänge wieder aufgenommen werden (330) nachdem die Wartung der Festplatte durchgeführt wurde.

3. Verfahren nach Anspruch 1, bei dem der Durchführungsschritt wiederholt wird.

4. Verfahren nach Anspruch 1, bei dem der Lese-/Schreibvorgang verfolgt wird (305) vor dem Vorhersagen (310) von unproduktiven Zeiten.

## Revendications

1. Procédé permettant de faire fonctionner un appareil de lecture/enregistrement comprenant les étapes suivantes :
- prévision (310) de périodes d'inactivité pour une tête de lecture/d'enregistrement basées sur une opération de lecture/d'enregistrement ;
- identification d'un emplacement sur un disque dur sur lequel une opération de maintenance de la couche de lubrifiant est nécessaire ; et
- exécution (325) de l'opération de maintenance de la couche de lubrifiant sur le disque dur en fonction de la durée de la période d'inactivité et d'un emplacement sur le disque dur de la tête de lecture/d'enregistrement.

2. Procédé selon la revendication 1 dans lequel les opérations de lecture/d'enregistrement reprennent (330) après exécution de la maintenance du disque.

3. Procédé selon la revendication 1 dans lequel l'étape d'exécution est répétée.

4. Procédé selon la revendication 1 dans lequel les opérations de lecture/d'enregistrement sont repérées (305) avant la prévision (310) des périodes d'inactivité.
